# EUROPEAN PATENT SPECIFICATION

(11) **EP 3 474 147 B1**
(45) Date of publication and mention of the grant of the patent: **02.12.2020**
(21) Application number: 17814487.9
(22) Date of filing: 21.04.2017
(51) Int. Cl.: G06F 12/08, G06F 12/0866

(54) **CACHE MANAGEMENT METHOD AND DEVICE, AND COMPUTER STORAGE MEDIUM**
CACHE-VERWALTUNGSVERFAHREN UND -VORRICHTUNG UND COMPUTERSPEICHERMEDIUM
PROCÉDÉ ET DISPOSITIF DE GESTION DE CACHE, ET SUPPORT DE STOCKAGE INFORMATIQUE

(30) Priority: 21.06.2016 CN 201610454789
(43) Date of publication of application: 24.04.2019
(73) Proprietor: Sanechips Technology Co., Ltd., Shenzhen, Guangdong 518055 (CN)
(72) Inventor: MA, Qian, Shenzhen Guangdong 518055 (CN); WANG, Linbin, Shenzhen Guangdong 518055 (CN); YANG, Jiewei, Shenzhen Guangdong 518055 (CN); ZHONG, Jianfeng, Shenzhen Guangdong 518055 (CN)
(74) Representative: Lavoix
(86) International application number: PCT/CN2017/081404
(87) International publication number: WO 2017/219749

(56) References cited:
- CN-A- 1 717 664
- CN-A- 101 162 441
- CN-A- 101 997 918
- CN-A- 103 731 368
- US-A1- 2014 325 142
- US-A1- 2015 261 798

## Description

### TECHNICAL FIELD

The disclosure relates to the field of computers, and in particular to a cache management method and device, and a computer storage medium.

### BACKGROUND

When a cache (e.g., a Static Random Access Memory (SRAM) or Dynamic Random Access Memory (DRAM)) is used, the cache needs to be managed through, for example, a simple way of First Input First Output (FIFO), and a complex way of various link tables. Document US 2015/261798 A1 discloses a file system as a hierarchy of chunks in a chunk storage system adapted to maintain cached child-to-parent mappings corresponding to a particular chunk in a hierarchy of chunks stored in a content-addressable chunk store and mapping the particular chunk in the hierarchy of chunks. Document US 2014/325142 A1 discloses a method for partitioning virtual block data into multiple variable-sized chunks, caching each of the multiple variable-sized chunks in a chunk cache according to content of each of the multiple variable-sized chunks, initializing virtual block-to-chunk mapping and chunk-to-physical block mapping for each of the multiple variable-sized chunks, and detecting duplicate disk input and/or output requests.

When the cache is managed, there are two problems, one being that resources required for managing the cache are increased along with the increase in capacities of caches, and the other being that in order to reduce the resources consumed to manage the cache, the management granularity of the cache typically is increased at the sacrifice of the utilization rate of the cache.

Therefore, how to save the resources for cache management while taking into consideration of the utilization rate of the cache is a problem to be solved urgently at present.

### SUMMARY

In order to solve the technical problems in the conventional art, the embodiments of the disclosure provide a cache management method and device.

The technical solutions of the embodiments of the disclosure are implemented as follows.

An embodiment of the disclosure provides a cache management method, which may include the following operations.

At least one first storage chunk is allocated for a received message to store the message, where each of the at least one first storage chunk includes N storage units, and N is an integer greater than or equal to 2.

Based on an address of the allocated first storage chunk and a position of a storage unit occupied by the message in the first storage chunk, a first mapping relationship table is generated, where the first mapping relationship table characterizes a storage address mapping relationship of the message.

For each of the at least one allocated first storage chunk, a second storage chunk to which each of the at least one allocated first storage chunk belongs is determined, where the second storage chunk includes M first storage chunks, and M is an integer greater than or equal to 2.

A second mapping relationship table is generated by using addresses of the determined one or more second storage chunks and a position of the at least one first storage chunk in the determined one or more second storage chunks, where the second mapping relationship table characterizes an address mapping relationship of the at least one first storage chunk for storing the message.

In the above solutions, before at least one first storage chunk is allocated for a received message, the method may further include the following operations.

A length statistics is performed on the message to obtain first information, where the first information characterizes length information of the message.

Correspondingly, the at least one first storage chunk is allocated for the received message according to the first information.

In the above solutions, before a length statistics is performed on the message, the method may further include the following operations.

According to a type of the message, a first queue to which the message belongs is determined.

The message is added to the first queue.

In the above solutions, when the at least one first storage chunk is allocated for the received message, after N storage units of one first storage chunk are occupied completely, a next first storage chunk is occupied.

In the above solutions, when for each of the at least one allocated first storage chunk, the second storage chunk to which each of the at least one allocated first storage chunk belongs is determined, after all M first storage chunks of one second storage chunk are registered, a next second storage chunk is applied as a second storage chunk to which a current storage chunk belongs.

An embodiment of the disclosure further provides a cache management device, which may include an allocation unit, a first generation unit, a first determination unit and a second generation unit.

The allocation unit is configured to allocate at least one first storage chunk for a received message to store the message, where each of the at least one first storage chunk includes N storage units, and N is an integer greater than or equal to 2.

The first generation unit is configured to generate, based on an address of the allocated first storage chunk and a position of a storage unit occupied by the message in the first storage chunk, a first mapping relationship table, where the first mapping relationship table characterizes a storage address mapping relationship of the message.

The first determination unit is configured to determine, for each of the at least one allocated first storage chunk, a second storage chunk to which each of the at least one allocated first storage chunk belongs, where the second storage chunk includes M first storage chunks, and M is an integer greater than or equal to 2.

The second generation unit is configured to generate a second mapping relationship table by using addresses of the determined one or more second storage chunks and a position of the at least one first storage chunk in the determined one or more second storage chunks, where the second mapping relationship table characterizes an address mapping relationship of the at least one first storage chunk for storing the message.

In the above solutions, the device may further include a statistic unit.

The statistic unit is configured to perform a length statistics on the message to obtain first information, where the first information characterizes length information of the message.

Correspondingly, the allocation unit is configured to allocate the at least one first storage chunk to the received message according to the first information.

In the above solutions, the device may further include a second determination unit.

The second determination unit is configured to determine, according to a type of the message, a first queue to which the message belongs; and add the message to the first queue.

In the above solutions, the allocation unit is configured to, when the at least one first storage chunk is allocated for the received message, after N storage units of one first storage chunk are occupied completely, occupy a next first storage chunk.

In the above solutions, the first determination unit is configured to apply, when for each of the at least one allocated first storage chunk, the second storage chunk to which each of the at least one allocated first storage chunk belongs is determined, after all M first storage chunks of one second storage chunk are registered, a next second storage chunk as a second storage chunk to which a current storage chunk belongs.

An embodiment of the disclosure further provides a computer storage medium; the computer storage medium includes a group of instructions that, when executed, cause at least one processor to execute the above-mentioned cache management method.

According to the cache management method and device and the computer storage medium provided by the embodiments of the disclosure, the at least one first storage chunk is allocated for the received message to store the message, where each of the at least one first storage chunk includes N storage units, and N is the integer greater than or equal to 2; based on the address of the allocated first storage chunk and the positions of the storage units occupied by the message in the first storage chunk, the first mapping relationship table is generated, where the first mapping relationship table characterizes the storage address mapping relationship of the message; for each of the at least one allocated first storage chunk, the second storage chunk to which each of the at least one allocated first storage chunk belongs is determined, where each of the second storage chunks includes M first storage chunks, and M is the integer greater than or equal to 2; and the second mapping relationship table is generated by using the addresses of the determined one or more second storage chunks and the position of the at least one first storage chunk in the determined one or more second storage chunks, where the second mapping relationship table characterizes the address mapping relationship of the at least one first storage chunk for storing the message. By introducing virtual storage chunks (the second storage chunks), resources for cache management may be effectively saved.

Furthermore, with the adoption of the first mapping relationship table and the second mapping relationship table, compared with an existing manner in which one layer of chunks are used, the number of the storage units in the first chunk is obviously reduced, and a same function as the existing manner can also be implemented. Therefore, the use efficiency of the cache may be effectively improved.

### BRIEF DESCRIPTION OF DRAWINGS

In the accompanying drawings (unnecessarily drawn according to a proportion), a similar numeral describes a similar component in different drawings. A similar numeral having different latter suffixes may indicate different examples of a similar component. The embodiments discussed hereinafter are embodied by the accompanying drawings illustratively but not unrestrictedly.
FIG. 1A-B illustrates a schematic diagram of a cache management method in the related art.
FIG. 2A-B illustrates a schematic diagram of another cache management method in the related art.
FIG. 3 is a flowchart schematic diagram of a cache management method according to a first embodiment of the disclosure.
FIG. 4 is a schematic diagram of a cache management manner according to a second embodiment of the disclosure.
FIG. 5 is a structural schematic diagram of a cache management device according to a third embodiment of the disclosure.

### DETAILED DESCRIPTION

The disclosure will be further described below in detail in combination with accompanying drawings and embodiments.

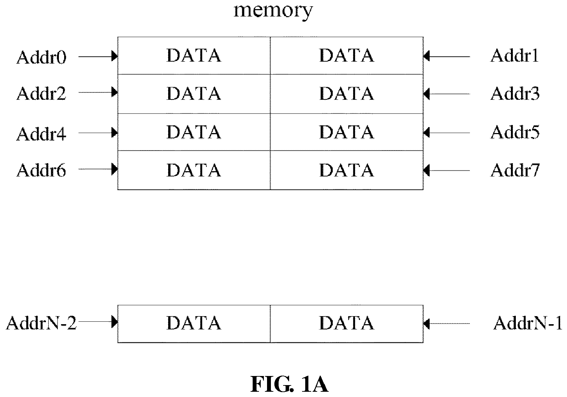

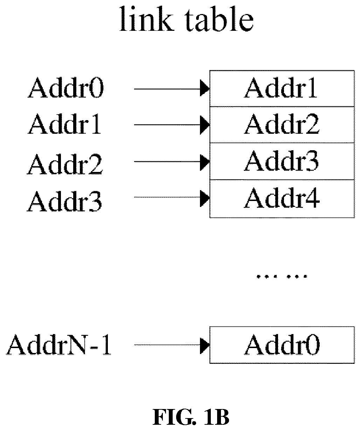

At present, a common practice for cache management is to divide a storage space of a cache into small storage units, and address each of the storage units. By managing addresses, the cache management is implemented indirectly. For example, as shown in FIG. 1A, a cache having a size of 1 GB is divided into storage units having 128 Byte (B) each, so that a number 8 M of storage units may be obtained. The 8M storage units may be addressed by using 23 bits to manage the cache, and a corresponding address range is 23'h000000-23'h7FFFFF, as shown in FIG. IB.

In this sense, 184-Mbit (23bit^{∗}8M) address storage resources are required. An address is generally stored in an SRAM. Based on a currently universal device manufacturing process (a 28nm process (the size of a transistor is 28nm approximately)), the 184-Mbit SRAM needs to occupy an area of about 50mm², so that a large area is occupied and large resources are consumed.

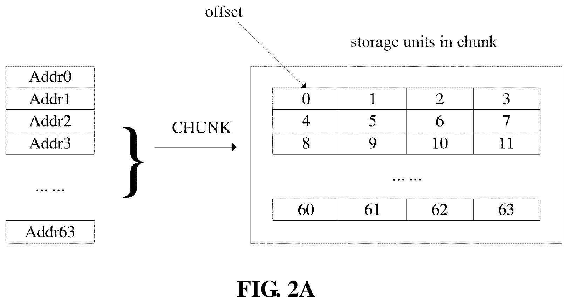

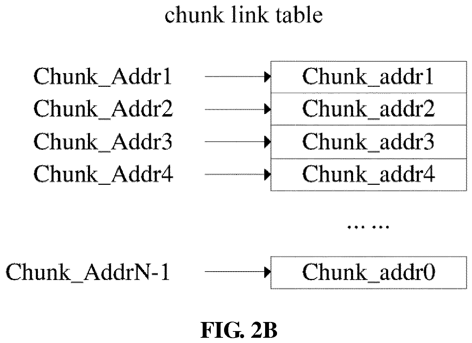

In order to solve the problem that the conventional cache management solutions consume excessively large resources, a chunk solution is pushed forward. A basic idea is as follows: a plurality of storage units are formed into a large storage unit and the link table management focuses on the large storage unit to manage the cache. For example, as shown in FIG. 2A, N small storage units shown in FIG. 1A are formed into a large storage chunk, e.g., former 64 small storage units (each small storage unit is 128 B) are formed into one chunk. At this moment, an address of each small storage unit is as follows: address of storage unit={Chunk_AddrX, 6'd0} + offset. Therefore, as shown in FIG. 2B, the number of the chunks is 128K, and SRAM resources required to manage the chunks is 2.25 Mbit (18bit^{∗}128K).

From the above description, it may be seen that the resources for the link table are effectively reduced by the chunk solution. However, in many cases, small storage units in the chunk cannot be shared, which results in that when the chunk solution is used, a certain cache space is wasted, and the use efficiency of the cache is reduced.

In order to solve the problem that the storage space is wasted in the chunk solution, a simplest method is to reduce the number of the small storage units in the chunk. For example, by changing that each chunk includes 64 small storage units into that each chunk includes 8 small storage units, although the resources for managing the link table are increased to 20 Mbit, the utilization rate is improved by 8 times. However, there are two problems for the method of reducing the number of the storage units in the chunk, one being that the resources for managing the link table are correspondingly increased, and the other being that while the number of the storage units in the chunk is reduced, a capacity of a link table formed by the chunk to an RAN access delay becomes lower. For example, when a current chunk is used, chunk nodes behind the current chunk are obtained. If storage units in the current chunk are used completely, and the rear chunk nodes are not obtained, the operation for the link table is stopped at this moment, and thus the efficiency of operating the link table is affected.

Therefore, how to save the resources for the cache management and consider the utilization rate of the cache is a problem to be solved urgently at present.

In view of this, in various embodiments of the disclosure, at least one first storage chunk is allocated for a received message to store the message, where each of the at least one first storage chunk includes N storage units, and N is an integer greater than or equal to 2; based on an address of the allocated first storage chunk and a position of a storage unit occupied by the message in the first storage chunk, a first mapping relationship table is generated, where the first mapping relationship table characterizes a storage address mapping relationship of the message; for each of the at least one allocated first storage chunk, a second storage chunk to which each of the at least one allocated first storage chunk belongs is determined, where the second storage chunk includes M first storage chunks, and M is the integer greater than or equal to 2; and a second mapping relationship table is generated by using addresses of the determined one or more second storage chunks and a position of the at least one first storage chunk in the determined one or more second storage chunks, where the second mapping relationship table characterizes an address mapping relationship of the at least one first storage chunk for storing the message.

### First Embodiment

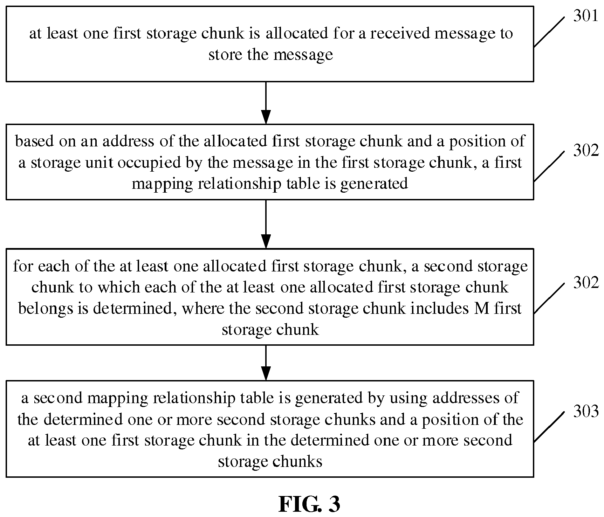

An embodiment of the disclosure provides a cache management method. As shown in FIG. 3, the method may include the following operations 301 to 303.

At 301: at least one first storage chunk is allocated for a received message to store the message.

Herein, each of the at least one first storage chunk includes N storage units, and N is an integer greater than or equal to 2.

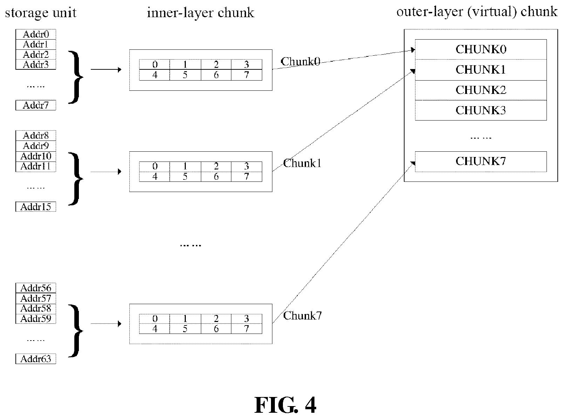

During an actual application, as shown in FIG. 4, in this embodiment of the disclosure, a cache is management in a manner of adopting two layers of chunks, i.e., the chunks are divided into two layers, each inner-layer chunk (first storage chunk) is composed of small storage units, and each outer-layer chunk (second storage chunk) is composed of the inner-layer chunks.

It is necessary to determine the number of storage units included in each inner-layer chunk according to the size of the cache and the management granularity. In other words, N is determined according to the size of the cache and the management granularity.

The management granularity refers to a minimal storage unit into which the cache can be divided. For example, it is assumed that the size of a memory is 1 GB and the storage units are obtained by dividing the memory by taking each 128 B as a unit, a number 8 M of storage units may be obtained. At this moment, the management granularity may be understood as a 128-B storage unit.

When the at least one first storage chunk is allocated for the received message, after N storage units of one first storage chunk are occupied completely, a next first storage chunk is occupied. Popularly speaking, when the inner-layer chunk(s) is/are allocated for the message, according to an address link table, one inner-layer chunk is applied first and the one inner-layer chunk includes N storage units and corresponds to N storage addresses. Only after the N storage addresses are used completely, another inner-layer chunk can be applied.

It is to be noted that two messages belonging to a same queue may share one inner-layer chunk, and two messages not belonging to the same queue cannot share one inner-layer chunk, or otherwise, confusion in reading may be caused.

During an actual application, there is a need to allocate the first storage chunk(s) to the message according to lengths of the message.

In view of this, in one embodiment, before at least one first storage chunk is allocated for a received message, the method may further include the following operations.

A length statistics is performed on the message to obtain first information, where the first information characterizes length information of the message.

Correspondingly, the at least one first storage chunk is allocated for the received message according to the first information.

In addition, during the actual application, the storage of the message is implemented based on the queues. In other words, each queue maintains one address link table, so that different queues can be clearly distinguished from one another.

A queue corresponding to the message is determined according to a demand.

In view of this, in one embodiment, before the length statistics is performed on the message, the method may further include the following operations.

According to a type of the message, a first queue to which the message belongs is determined.

The message is added to the first queue.

At 302: based on an address of the allocated first storage chunk and a position of a storage unit occupied by the message in the first storage chunk, a first mapping relationship table is generated.

Herein, the first mapping relationship table characterizes a storage address mapping relationship of the message.

The position of the storage unit occupied by the message in the first storage chunk may be understood as a certain storage unit in the first storage chunk, which is occupied by the message. It may be expressed by using an offset. For example, it is assumed that 8 storage units are provided in total in the first storage chunk, and a storage unit occupied by the message is a fourth storage unit in the first storage chunk, and a corresponding offset is 4. With the address of the first storage chunk in combination with the offset, a first mapping relationship of the message may be obtained.

At 303: for each of the at least one allocated first storage chunk, a second storage chunk to which each of the at least one allocated first storage chunk belongs is determined, where the second storage chunk includes M first storage chunks.

Herein, M is an integer greater than or equal to 2.

Similar to the manner for determining the N, during the actual application, it is necessary to determine the inner-layer chunks (the number of the first storage chunks) included in each outer-layer chunk (second storage chunk) according to the size of the cache and the management granularity. In other words, M is determined according to the size of the cache and the management granularity.

Moreover, when for each of the at least one allocated first storage chunk, the second storage chunk to which each of the at least one allocated first storage chunk belongs is determined, after all M first storage chunks of one second storage chunk are registered, a next second storage chunk is applied as a second storage chunk to which a current storage chunk belongs. Popularly speaking, after M inner-layer chunks are registered in each outer-layer chunk, subsequent applied inner-layer chunks need to newly apply for one outer-layer chunk and are registered in the newly applied outer-layer chunk, so the effect that addresses of corresponding inner-layer chunks may be found via addresses of outer-layer chunks is implemented.

At 304: a second mapping relationship table is generated by using addresses of the determined one or more second storage chunks and a position of the at least one first storage chunk in the determined one or more second storage chunks.

Herein, the second mapping relationship table characterizes an address mapping relationship of the at least one first storage chunk for storing the message.

According to the cache management method provided by this embodiment of the disclosure, the at least one first storage chunk is allocated for the received message to store the message, where each of the at least one first storage chunk includes N storage units, and N is the integer greater than or equal to 2; based on the address of the allocated first storage chunk and the positions of the storage units occupied by the message in the first storage chunk, the first mapping relationship table is generated, where the first mapping relationship table characterizes the storage address mapping relationship of the message; for each of the at least one allocated first storage chunk, the second storage chunk to which each of the at least one allocated first storage chunk belongs is determined, where each of the second storage chunks includes M first storage chunks, and M is the integer greater than or equal to 2; and the second mapping relationship table is generated by using the addresses of the determined one or more second storage chunks and the position of the at least one first storage chunk in the determined one or more second storage chunks, where the second mapping relationship table characterizes the address mapping relationship of the at least one first storage chunk for storing the message. By introducing virtual storage chunks (the second storage chunks), resources for cache management may be effectively saved.

Furthermore, with the adoption of the first mapping relationship table and the second mapping relationship table, compared with an existing manner in which one layer of chunks are used, the number of the storage units in the first chunk is obviously reduced, and a same function as the existing manner can also be implemented. Therefore, the use efficiency of a cache may be effectively improved.

Additionally, for each of the second storage chunks, the time for obtaining a node of a next second storage chunk may be prolonged to N^{∗}M storage operation periods; when the link table is used, a time delay for an RAM access is increased. Therefore, the operation efficiency of the link table can be effectively improved.

### Second Embodiment

On the basis of the first embodiment, in this embodiment, the size of the cache is 1 GB, and the cache is divided by taking 128 B as a storage unit, i.e., the management granularity is 128 B.

According to the size of the cache and the management granularity, it is determined that eight storage units are included in each inner-layer chunk, and simultaneously it is determined that eight inner-layer chunks are included in each outer-layer chunk. The above is as shown in FIG. 4.

When one message is added to a queue, according to length information of the message, an inner-layer chunk is applied first, where the inner-layer chunk includes eight addresses and the addresses respectively are Addr 0-7; another inner-layer chunk cannot be applied until the eight addresses are used completely; and based on the applied inner-layer chunk and information that a storage unit occupied by the message is which one storage unit (offset) in the inner-layer chunk, the registration is performed, i.e., a first mapping relationship table is generated.

Furthermore, whenever one inner-layer chunk is applied, the inner-layer chunk is registered in a chunk table from an inner layer to an outer layer, i.e., a second mapping relationship table is generated. Therefore, addresses of the inner-layer chunks may be found by addresses of the outer-layer chunks. When each inner-layer chunk is registered, it is registered based on an address of an outer-layer chunk and information that the inner-layer chunk is which one inner-layer chunk in the outer-layer chunk. The table for registering the chunks from the inner layer to the outer layer may be referred to as an inner layer and outer layer mapping table.

For a first applied inner-layer chunk, an outer-layer chunk is applied simultaneously for registration. After eight inner-layer chunks are registered in each outer-layer chunk, subsequent applied inner-layer chunks need to newly apply for an outer-layer chunk, and are registered in the newly applied outer-layer chunk. Eight inner-layer chunks, equivalent to 64 storage units, are registered in each outer-layer chunk. The time that the outer-layer chunk obtains a next chunk node may be prolonged to 64 storage operation periods.

It may be seen from the above description that each outer-layer chunk is not a real physical chunk and may be understood as a virtual chunk. Therefore, the solution provided by this embodiment of the disclosure may be understood as a virtual chunk solution.

According to the solution provided by this embodiment of the disclosure, through the manner of adopting two layers of chunks, the SRAM resources required to manage the chunks may be obviously reduced, and the resources for cache management may be effectively saved. Furthermore, each inner-layer chunk includes eight storage units, and each outer-layer chunk includes eight inner-layer chunks (equivalent to 64 storage units). In this way, compared with the existing manner of adopting one layer of chunks, the number of the storage units in a first chunk is obviously reduced, and a same function as the existing manner can also be implemented. Therefore, the use efficiency of the cache may be effectively improved.

In addition, the time that the outer-layer chunk obtains the next chunk node may be prolonged to 64 storage operation periods, so that the operation efficiency of the link table is effectively improved.

In conclusion, compared with existing technical solutions, by adopting the solutions provided by this embodiment of the disclosure, a good compromised effect may be achieved among the utilization rate of the storage space, the link table management resources and the operation efficiency of the link table.

### Embodiment 3

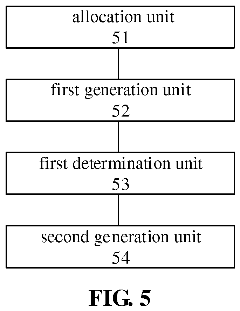

In order to implement the method provided by the above embodiment of the disclosure, an embodiment provides a cache management device. As shown in FIG. 5, the device may include an allocation unit 51, a first generation unit 52, a first determination unit 53, and a second generation unit 54.

The allocation unit 51 is configured to allocate at least one first storage chunk for a received message to store the message, where each of the at least one first storage chunk includes N storage units, and N is an integer greater than or equal to 2.

The first generation unit 52 is configured to generate, based on an address of the allocated first storage chunk and a position of a storage unit occupied by the message in the first storage chunk, a first mapping relationship table, where the first mapping relationship table characterizes a storage address mapping relationship of the message.

The first determination unit 53 is configured to determine, for each of the at least one allocated first storage chunk, a second storage chunk to which each of the at least one allocated first storage chunk belongs, where the second storage chunk includes M first storage chunks, and M is an integer greater than or equal to 2.

The second generation unit 54 is configured to generate a second mapping relationship table by using addresses of the determined one or more second storage chunks and a position of the at least one first storage chunk in the determined one or more second storage chunks, where the second mapping relationship table characterizes an address mapping relationship of the at least one first storage chunk for storing the message.

During an actual application, as shown in FIG. 4, in this embodiment of the disclosure, a cache is management in a manner of adopting two layers of chunks, i.e., the chunks are divided into two layers, each inner-layer chunk (first storage chunk) is composed of small storage units, and each outer-layer chunk (second storage chunk) is composed of the inner-layer chunks.

It is necessary to determine the number of storage units included in each inner-layer chunk according to the size of the cache and the management granularity. In other words, N is determined according to the size of the cache and the management granularity.

The management granularity refers to a minimal storage unit into which the cache can be divided. For example, it is assumed that the size of a memory is 1 GB and the storage units are obtained by dividing the memory by taking each 128 B as a unit, a number 8 M of storage units may be obtained. At this moment, the management granularity may be understood as a 128-B storage unit.

When the at least one first storage chunk is allocated for the received message, after N storage units of one first storage chunk of the allocation unit 51 are occupied completely, a next first storage chunk is occupied. Popularly speaking, when the inner-layer chunks are allocated for the message, according to an address link table, one inner-layer chunk is applied first and the one inner-layer chunk includes N storage units and corresponds to N storage addresses. Only after the N storage addresses are used completely, another inner-layer chunk can be applied.

It is to be noted that two messages belonging to a same queue may share one inner-layer chunk, and two messages not belonging to the same queue cannot share one inner-layer chunk, or otherwise, confusion in reading may be caused.

During an actual application, there is a need to allocate the first storage chunks to the message according to lengths of the message.

In view of this, in one embodiment, the device may further include a statistic unit.

The statistic unit is configured to perform a length statistics on the message to obtain first information, where the first information characterizes length information of the message.

Correspondingly, the allocation unit 51 is configured to allocate the at least one first storage chunk to the received message according to the first information.

In addition, during the actual application, the storage of the message is implemented based on the queues. In other words, each queue maintains one address link table, so that different queues can be clearly distinguished from one another.

A queue corresponding to the message is determined according to a demand.

In view of this, in one embodiment, the device may further include a second determination unit.

The second determination unit is configured to determine, according to a type of the message, a first queue to which the message belongs; and add the message to the first queue.

The position of the storage unit occupied by the message in the first storage chunk may be understood as a certain storage unit in the first storage chunk, which is occupied by the message. It may be expressed by using an offset. For example, it is assumed that 8 storage units are provided in total in the first storage chunk, and a storage unit occupied by the message is a fourth storage unit in the first storage chunk, and a corresponding offset is 4. With the address of the first storage chunk in combination with the offset, a first mapping relationship of the message may be obtained.

Similar to the manner for determining the N, during the actual application, it is necessary to determine the inner-layer chunks (the number of the first storage chunks) included in each outer-layer chunk (second storage chunk) according to the size of the cache and the management granularity. In other words, M is determined according to the size of the cache and the management granularity.

Moreover, when for each of the at least one allocated first storage chunk, the second storage chunk to which each of the at least one allocated first storage chunk belongs is determined, after all M first storage chunks of one second storage chunk are registered, a next second storage chunk is applied by the first determination unit 53 as a second storage chunk to which a current storage chunk belongs. Popularly speaking, after M inner-layer chunks are registered in each outer-layer chunk, subsequent applied inner-layer chunks need to newly apply for one outer-layer chunk and are registered in the newly applied outer-layer chunk, so the effect that addresses of corresponding inner-layer chunks may be found via addresses of outer-layer chunks is implemented.

During the actual application, the allocation unit 51, the first generation unit 52, the first determination unit 53, the second generation unit 54, the statistic unit and the second determination unit may be implemented by a processor in the cache management device such as a Central Processing Unit (CPU), a Micro Control Unit (MCU), a Digital Signal Processor (DSP) or a Field-Programmable Gate Array (FPGA).

According to the cache management device provided by this embodiment of the disclosure, the allocation unit 51 allocates the at least one first storage chunk for the received message to store the message, where each of the at least one first storage chunk includes N storage units, and N is the integer greater than or equal to 2; based on the address of the allocated first storage chunk and the positions of the storage units occupied by the message in the first storage chunk, the second generation unit 52 generates the first mapping relationship table, where the first mapping relationship table characterizes the storage address mapping relationship of the message; for each of the at least one allocated first storage chunk, the first determination unit 52 determines the second storage chunk to which each of the at least one allocated first storage chunk belongs, where each of the second storage chunks includes M first storage chunks, and M is the integer greater than or equal to 2; and the second generation unit 54 generates the second mapping relationship table by using the addresses of the determined one or more second storage chunks and the position of the at least one first storage chunk in the determined one or more second storage chunks, where the second mapping relationship table characterizes the address mapping relationship of the at least one first storage chunk for storing the message. By introducing virtual storage chunks (the second storage chunks), resources for cache management may be effectively saved.

Furthermore, with the adoption of the first mapping relationship table and the second mapping relationship table, compared with an existing manner in which one layer of chunks are used, the number of the storage units in the first chunk is obviously reduced, and a same function as the existing manner can also be implemented. Therefore, the use efficiency of a cache may be effectively improved.

Additionally, for each of the second storage chunks, the time for obtaining a node of a next second storage chunk may be prolonged to N^{∗}M storage operation periods; when the link table is used, a time delay for an RAM access is increased. Therefore, the operation efficiency of the link table can be effectively improved.

A person skilled in the art should understand that each embodiment of the disclosure may be provided as a method, a system, or a computer program product. Accordingly, the disclosure may take the form of a hardware embodiment, a software embodiment or an embodiment combining software and hardware aspects. Moreover, the disclosure may adopt a form of computer program product executable on one or more computer-available storage media (including, but not limited to, a disk memory, an optical memory and the like) including computer-available program codes.

The disclosure is described with reference to flowcharts and/or chunk diagrams of the method, equipment (system) and computer program product according to the embodiment of the disclosure. It should be understood that each flow and/or chunk in the flowcharts and/or the chunk diagrams and combinations of the flows and/or chunks in the flowcharts and/or the chunk diagrams may be implemented by computer program instructions. These computer program instructions may be provided to a universal computer, a dedicated computer, an embedded processor or a processor of other programmable data processing equipment to generate a machine, so that a device for realizing a function specified in one or more flows in the flowcharts and/or one or more chunks in the chunk diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one chunk or many chunks in the chunk diagrams.

These computer program instructions may further be loaded onto a computer or other programmable data processing devices, so that a series of operating steps are executed on the computer or the other programmable data processing devices to generate processing steps implemented by the computer, and steps for realizing the function specified in one flow or many flows in the flowcharts and/or one chunk or many chunks in the chunk diagrams are provided by the instructions executed on the computer or the other programmable data processing equipment.

In view of this, an embodiment of the disclosure further provides a computer storage medium; the computer storage medium includes a group of instructions that, when executed, cause at least one processor to execute the cache management method in the above embodiment of the disclosure.

The above is only preferred embodiment of the disclosure, and is not intended to limit a scope of protection of the disclosure.

### INDUSTRIAL APPLICABILITY

According to the solutions provided by the embodiments of the disclosure, the at least one first storage chunk is allocated for the received message to store the message, where each of the at least one first storage chunk includes N storage units, and N is the integer greater than or equal to 2; based on the address of the allocated first storage chunk and the positions of the storage units occupied by the message in the first storage chunk, the first mapping relationship table is generated, where the first mapping relationship table characterizes the storage address mapping relationship of the message; for each of the at least one allocated first storage chunk, the second storage chunk to which each of the at least one allocated first storage chunk belongs is determined, where each of the second storage chunks includes M first storage chunks, and M is the integer greater than or equal to 2; and the second mapping relationship table is generated by using the addresses of the determined one or more second storage chunks and the position of the at least one first storage chunk in the determined one or more second storage chunks, where the second mapping relationship table characterizes the address mapping relationship of the at least one first storage chunk for storing the message. By introducing virtual storage chunks (the second storage chunks), resources for cache management may be effectively saved.

## Claims

1. A cache management method, comprising:
allocating (301) at least one first storage chunk for a received message to store the message, wherein each of the at least one first storage chunk includes N storage units, and N is an integer greater than or equal to 2;
based on an address of the allocated first storage chunk and a position of a storage unit occupied by the message in the first storage chunk, generating (302) a first mapping relationship table, wherein the first mapping relationship table characterizes a storage address mapping relationship of the message;
for each of the at least one allocated first storage chunk, determining (302) a second storage chunk to which each of the at least one allocated first storage chunk belongs, wherein the second storage chunk includes M first storage chunks, and M is an integer greater than or equal to 2; and
generating (303) a second mapping relationship table by using addresses of the determined one or more second storage chunks and a position of the at least one first storage chunk in the determined one or more second storage chunks, wherein the second mapping relationship table characterizes an address mapping relationship of the at least one first storage chunk for storing the message.

2. The method of claim 1, wherein before allocating at least one first storage chunk for the received message, the method further comprises:
performing a length statistics on the message to obtain first information, wherein the first information characterizes length information of the message; and
correspondingly, allocating the at least one first storage chunk for the received message according to the first information.

3. The method of claim 2, wherein before performing a length statistics on the message, the method further comprises:
according to a type of the message, determining a first queue to which the message belongs; and
adding the message to the first queue.

4. The method of claim 1, wherein when the at least one first storage chunk is allocated for the received message, after N storage units of one first storage chunk are occupied completely, a next first storage chunk is occupied.

5. The method of claim 1, wherein when for each of the at least one allocated first storage chunk, the second storage chunk to which each of the at least one allocated first storage chunk belongs is determined, after all M first storage chunks of one second storage chunk are registered, a next second storage chunk is applied as a second storage chunk to which a current storage chunk belongs.

6. A cache management device, comprising:
an allocation unit (51), configured to allocate at least one first storage chunk for a received message to store the message, wherein each of the at least one first storage chunk includes N storage units, and N is an integer greater than or equal to 2;
a first generation unit (52), configured to generate, based on an address of the allocated first storage chunk and a position of a storage unit occupied by the message in the first storage chunk, a first mapping relationship table, wherein the first mapping relationship table characterizes a storage address mapping relationship of the message;
a first determination unit (53), configured to determine, for each of the at least one allocated first storage chunk, a second storage chunk to which each of the at least one allocated first storage chunk belongs, wherein the second storage chunk includes M first storage chunks, and M is an integer greater than or equal to 2; and
a second generation unit (54), configured to generate a second mapping relationship table by using addresses of the determined one or more second storage chunks and a position of the at least one first storage chunk in the determined one or more second storage chunks, wherein the second mapping relationship table characterizes an address mapping relationship of the at least one first storage chunk for storing the message.

7. The device of claim 6, further comprising:
a statistic unit, configured to perform a length statistics on the message to obtain first information, wherein the first information characterizes length information of the message; and
correspondingly, the allocation unit is configured to allocate the at least one first storage chunk to the received message according to the first information.

8. The device of claim 7, further comprising:
a second determination unit, configured to determine, according to a type of the message, a first queue to which the message belongs; and add the message to the first queue.

9. The device of claim 6, wherein the allocation unit is configured to, when the at least one first storage chunk is allocated for the received message, after N storage units of one first storage chunk are occupied completely, occupy a next first storage chunk.

10. The device of claim 9, wherein the first determination unit is configured to apply, when for each of the at least one allocated first storage chunk, the second storage chunk to which each of the at least one allocated first storage chunk belongs is determined, after all M first storage chunks of one second storage chunk are registered, a next second storage chunk as a second storage chunk to which a current storage chunk belongs.

11. A computer storage medium, comprising a group of instructions that, when executed, cause the device of claim 6 to execute the above-mentioned cache management method of any one of claims 1 to 5.

## Patentansprüche

1. Cache-Verwaltungsverfahren, umfassend:
Zuteilen (301) mindestens eines Speicher-Chunks pro empfangene Nachricht zwecks Speicherung der Nachricht, wobei jeder des mindestens einen Speicher-Chunks N Speichereinheiten enthält,
und N eine Ganzzahl größer oder gleich 2 ist;
aufgrund einer Adresse des zugeteilten ersten Speicher-Chunks und einer Position einer von der Nachricht belegten Speichereinheit im ersten Speicher-Chunk: Erzeugen (302) einer ersten Mapping-Beziehungstabelle, wobei die erste Mapping-Beziehungstabelle eine Speicheradressen-Mapping-Beziehung der Nachricht charakterisiert;
für jeden des mindestens einen zugeteilten ersten Speicher-Chunks: Bestimmen (302) eines zweiten Speicher-Chunks, zu dem jeder der zugeteilten einen oder mehreren ersten Speicher-Chunks gehört, wobei der zweite Speicher-Chunk M erste Speicher-Chunks umfasst und M eine Ganzzahl größer oder gleich 2 ist, und
Erzeugen (303) einer zweiten Mapping-Beziehungstabelle unter Heranziehung von Adressen des bestimmten mindestens einen zweiten Speicher-Chunks und einer Position des mindestens einen ersten Speicher-Chunks im bestimmten mindestens einen zweiten Speicher-Chunk, wobei die zweite Mapping-Beziehungstabelle eine Adressen-Mapping-Beziehung des mindestens einen ersten Speicher-Chunks zwecks Speicherung der Nachricht charakterisiert.

2. Verfahren nach Anspruch 1, wobei das Verfahren, vor der Zuteilung von mindestens einem ersten Speicher-Chunk zur empfangenen Nachricht, ferner umfasst:
Durchführen von Längenstatistik an der Nachricht, um erste Informationen zu erhalten, wobei die ersten Informationen Längeninformationen der Nachricht charakterisieren und
entsprechendes Zuteilen des mindestens einen ersten Speicher-Chunks zur empfangenen Nachricht gemäß der ersten Information.

3. Verfahren nach Anspruch 2, wobei das Verfahren, vor der Durchführung einer Längenstatistik an der Nachricht, ferner umfasst:
gemäß einem Typ der Nachricht: Bestimmen einer ersten Warteschlange, zu der die Nachricht gehört, und
Hinzufügen der Nachricht zur ersten Warteschlange.

4. Verfahren nach Anspruch 1, wobei, wenn der mindestens eine erste Speicher-Chunk der empfangenen Nachricht zugeteilt wird, ein nächster erster Speicher-Chunk belegt wird, nachdem N Speichereinheiten eines ersten Speicher-Chunks vollständig belegt worden sind.

5. Verfahren nach Anspruch 1, wobei, wenn für jeden des mindestens einen zugeteilten ersten Speicher-Chunks der zweite Speicher-Chunk, zu dem jeder der einen oder mehreren ersten Speicher-Chunks gehört, bestimmt wird, nachdem alle M ersten Speicher-Chunks eines zweiten Speicher-Chunks registriert werden, ein nächster zweiter Speicher-Chunk als zweiter Speicher-Chunk, zu dem ein aktueller Speicher-Chunk gehört, angewandt wird.

6. Cache-Verwaltungsvorrichtung, umfassend:
eine Zuteilungseinrichtung (51), die konfiguriert ist zum Zuweisen mindestens eines ersten Speicher-Chunks zu einer empfangenen Nachricht zwecks Speicherung der Nachricht, wobei jeder der einen oder mehreren ersten Speicher-Chunks N Speichereinheiten enthält und N eine Ganzzahl größer oder gleich 2 ist;
eine erste Erzeugungseinheit (52), die konfiguriert ist zum Erzeugen einer ersten Mapping-Beziehungstabelle aufgrund einer Adresse des zugeteilten ersten Speicher-Chunks und einer Position einer von der Nachricht belegten Speichereinheit im ersten Speicher-Chunk, wobei die erste Mapping-Beziehungstabelle eine Speicheradressen-Mapping-Beziehung der Nachricht charakterisiert;
eine erste Bestimmungseinheit (53), die konfiguriert ist zum: Bestimmen eines zweiten Speicher-Chunks, zu dem jeder der zugeteilten einen oder mehreren ersten Speicher-Chunks gehört, für jeden des mindestens einen zugeteilten ersten Speicher-Chunks, wobei der zweite Speicher-Chunk M erste Speicher-Chunks umfasst und M eine Ganzzahl größer oder gleich 2 ist, und
eine zweite Erzeugungseinheit (54), die konfiguriert ist zum Erzeugen einer zweiten Mapping-Beziehungstabelle unter Heranziehung von Adressen des bestimmten mindestens einen zweiten Speicher-Chunks und einer Position des mindestens einen ersten Speicher-Chunks im bestimmten mindestens einen zweiten Speicher-Chunk, wobei die zweite Mapping-Beziehungstabelle eine Adressen-Mapping-Beziehung des mindestens einen ersten Speicher-Chunks zwecks Speicherung der Nachricht charakterisiert.

7. Vorrichtung nach Anspruch 6, ferner umfassend:
eine Statistikeinheit, die konfiguriert ist zur Ausführung einer Längenstatistik an der Nachricht, um erste Informationen zu erlangen, wobei die ersten Informationen Längeninformationen der Nachricht charakterisieren und
die Zuteilungseinrichtung entsprechend konfiguriert ist zum Zuteilen des mindestens einen ersten Speicher-Chunks zur empfangenen Nachricht gemäß der ersten Information.

8. Vorrichtung nach Anspruch 7, ferner umfassend:
eine zweite Bestimmungseinheit, die konfiguriert ist zum Bestimmen, gemäß einem Typ der Nachricht, einer ersten Warteschlange, zu der die Nachricht gehrört, und zum Hinzufügen der Nachricht zur ersten Warteschlange.

9. Vorrichtung nach Anspruch 6, wobei die Zuteilungseinrichtung konfiguriert ist zum Belegen eines nächsten ersten Speicher-Chunks, wenn der mindestens eine erste Speicher-Chunk der empfangenen Nachricht zugeteilt wird, nachdem N Speichereinheiten eines ersten Speicher-Chunks vollständig belegt worden sind.

10. Vorrichtung nach Anspruch 9, wobei die erste Bestimmungseinheit konfiguriert ist zum Anwenden eines nächsten zweiten Speicher-Chunks als zweiter Speicher-Chunk, zu dem ein aktueller Speicher-Chunk gehört, wenn für jeden des mindestens einen zugeteilten ersten Speicher-Chunks der zweite Speicher-Chunk, zu dem jeder der einen oder mehreren ersten Speicher-Chunks gehört, bestimmt wird, nachdem alle M ersten Speicher-Chunks eines zweiten Speicher-Chunks registriert werden.

11. Computer-Datenträger, umfassend eine Gruppe von Befehlen, die bei Ausführung die Vorrichtung nach Anspruch 6 dazu veranlassen, das vorgenannte Cache-Verwaltungsverfahren nach einem der Ansprüche 1 - 5 auszuführen.

## Revendications

1. Procédé de gestion de cache, comprenant :
l'attribution (301) d'au moins un premier bloc de stockage à un message reçu pour stocker le message, dans lequel chacun de l'au moins un premier bloc de stockage inclut N unités de stockage, et N est un nombre entier supérieur ou égal à 2 ;
sur la base d'une adresse du premier bloc de stockage attribué et d'une position d'une unité de stockage occupée par le message dans le premier bloc de stockage, la production (302) d'une première table de relation de mappage, dans lequel la première table de relation de mappage caractérise une relation de mappage d'adresses de stockage du message ;
pour chacun de l'au moins un premier bloc de stockage attribué, la détermination (302) d'un second bloc de stockage auquel appartient chacun de l'au moins un premier bloc de stockage attribué, dans lequel le second bloc de stockage inclut M premiers blocs de stockage, et M est un nombre entier supérieur ou égal à 2 ; et
la production (303) d'une seconde table de relation de mappage en utilisant des adresses des un ou plusieurs seconds blocs de stockage déterminés et une position de l'au moins un premier bloc de stockage dans les un ou plusieurs seconds blocs de stockage déterminés, dans lequel la seconde table de relation de mappage caractérise une relation de mappage d'adresses de l'au moins un premier bloc de stockage destiné à stocker le message.

2. Procédé selon la revendication 1, dans lequel avant l'attribution d'au moins un premier bloc de stockage au message reçu, le procédé comprend en outre :
la réalisation d'une statistique de longueur sur le message pour obtenir des premières informations, dans lequel les premières informations caractérisent des informations de longueur du message ; et
en correspondance, l'attribution de l'au moins un premier bloc de stockage au message reçu en fonction des premières informations.

3. Procédé selon la revendication 2, dans lequel avant la réalisation d'une statistique de longueur sur le message, le procédé comprend en outre :
en fonction d'un type du message, la détermination d'une première file à laquelle appartient le message ; et
l'ajout du message à la première file.

4. Procédé selon la revendication 1, dans lequel lorsque l'au moins un premier bloc de stockage est attribué au message reçu, une fois que N unités de stockage d'un premier bloc de stockage sont entièrement occupées, un premier bloc de stockage suivant est occupé.

5. Procédé selon la revendication 1, dans lequel lorsque pour chacun de l'au moins un premier bloc de stockage attribué, le second bloc de stockage auquel appartient chacun de l'au moins un premier bloc de stockage attribué est déterminé, une fois que l'ensemble des M premiers blocs de stockage d'un second bloc de stockage sont enregistrés, un second bloc de stockage suivant est appliqué en tant que second bloc de stockage auquel appartient un bloc de stockage courant.

6. Dispositif de gestion de cache, comprenant :
une unité d'attribution (51), conçue pour attribuer au moins un premier bloc de stockage à un message reçu pour stocker le message, dans lequel chacun de l'au moins un premier bloc de stockage inclut N unités de stockage, et N est un nombre entier supérieur ou égal à 2 ;
une première unité de génération (52), conçue pour produire, sur la base d'une adresse du premier bloc de stockage attribué et d'une position d'une unité de stockage occupée par le message dans le premier bloc de stockage, une première table de relation de mappage, dans lequel la première table de relation de mappage caractérise une relation de mappage d'adresses de stockage du message ;
une première unité de détermination (53), conçue pour déterminer, pour chacun de l'au moins un premier bloc de stockage attribué, un second bloc de stockage auquel appartient chacun de l'au moins un premier bloc de stockage attribué, dans lequel le second bloc de stockage inclut M premiers blocs de stockage, et M est un nombre entier supérieur ou égal à 2 ; et
une seconde unité de production (54), conçue pour produire une seconde table de relation de mappage en utilisant des adresses des un ou plusieurs seconds blocs de stockage déterminés et une position de l'au moins un premier bloc de stockage dans les un ou plusieurs seconds blocs de stockage déterminés, dans lequel la seconde table de relation de mappage caractérise une relation de mappage d'adresses de l'au moins un premier bloc de stockage destiné à stocker le message.

7. Dispositif selon la revendication 6, comprenant en outre :
une unité statistique, configurée pour réaliser une statistique de longueur sur le message pour obtenir des premières informations, dans lequel les premières informations caractérisent des informations de longueur du message ; et
en correspondance, l'unité d'attribution est configurée pour attribuer l'au moins un premier bloc de stockage au message reçu en fonction des premières informations.

8. Dispositif selon la revendication 7, comprenant en outre :
une seconde unité de détermination, conçue pour déterminer, en fonction d'un type du message, une première file à laquelle appartient le message ; et ajouter le message à la première file.

9. Dispositif selon la revendication 6, dans lequel l'unité d'attribution est configurée pour occuper, lorsque l'au moins un premier bloc de stockage est attribué au message reçu, une fois que N unités de stockage d'un premier bloc de stockage sont entièrement occupées, un premier bloc de stockage suivant.

10. Dispositif selon la revendication 9, dans lequel la première unité de détermination est conçue pour appliquer, lorsque pour chacun de l'au moins un premier bloc de stockage attribué, le second bloc de stockage auquel appartient chacun de l'au moins un premier bloc de stockage attribué est déterminé, une fois que l'ensemble des M premiers blocs de stockage d'un second bloc de stockage sont enregistrés, un second bloc de stockage suivant en tant que second bloc de stockage auquel appartient un bloc de stockage courant.

11. Support de stockage informatique, comprenant un groupe d'instructions qui, lorsqu'elles sont exécutées amènent le dispositif de la revendication 6 à exécuter le procédé de gestion de cache susmentionné de l'une quelconque des revendications 1 à 5.
